# EUROPÄISCHE PATENTSCHRIFT

(11) **EP 1 116 064 B1**
(45) Veröffentlichungstag und Bekanntmachung des Hinweises auf die Patenterteilung: **23.04.2003**
(21) Anmeldenummer: 00942048.0
(22) Anmeldetag: 10.06.2000
(51) Int. Cl.: G02B 27/09

(54) **VERFAHREN UND VORRICHTUNG ZUR FORMUNG DES INTENSITÄTSPROFILS EINES LASERSTRAHLS**
METHOD AND DEVICE FOR SHAPING THE INTENSITY PROFILE OF A LASER BEAM
PROCEDE ET DISPOSITIF POUR LA MISE EN FORME DU PROFIL D'INTENSITE D'UN FAISCEAU LASER

(30) Priorität: 09.07.1999 DE 19931989
(43) Veröffentlichungstag der Anmeldung: 18.07.2001
(73) Patentinhaber: Deutsche Telekom AG, 53113 Bonn (DE)
(72) Erfinder: DULTZ, Wolfgang, D-65936 Frankfurt am Main (DE); BERESNEV, Leonid, Columbia, MD 21044 (US); HILD, Rosemarie, D-99510 Apolda (DE); HILS, Bernhard, D-61462 Königstein/Taunus (DE)
(86) Internationale Anmeldenummer: EP0005367
(87) Internationale Veröffentlichungsnummer: WO01004685

(56) Entgegenhaltungen:
- EP-A- 0 394 674
- US-A- 4 953 937
- US-A- 5 610 733
- US-A- 5 986 807

## Beschreibung

### Technisches Gebiet:

Die Erfindung betrifft ein Verfahren und eine Vorrichtung zur Formung des Intensitätsprofils eines Laserstrahls, insbesondere zur Herstellung eines homogenen Intensitätsprofils, sowie die Vewendung eines optisch adressierbaren ortsauflösenden Modulators (optical adressable spatial light modulator, OASLM) zur Formung des Intensitätsprofils eines Laserstrahls.

### Stand der Technik:

Die physikalischen Eigenschaften von Laserlicht unterscheiden sich grundlegend von denen herkömmlicher Lichtquellen. Laserlicht ist kohärent und kann als Lichtbündel mit einem geringen, wenn auch endlichen Öffnungswinkel erzeugt werden. Diese enge Bündelung ist für Beleuchtungs- und Abbildungszwecke besonders vorteilhaft, da dabei die Wellenfronten des Laserlichts dem Ideal der ebenen Wellen nahekommen. Sie erlauben damit eine besonders leichte Umwandlung in kugelförmige Wellenfronten und können zur hochauflösenden beugungsbegrenzten Fokussierung herangezogen werden.

Ein Nachteil des Laserstrahls ist sein Gaußscher Charakter, der durch die Art der Lichterzeugung im Resonator bedingt ist. Die Intensitätsverteilung des Lichtes quer zum Strahl hat die Form einer Gaußschen Glockenkurve, d. h. in der Mitte des Strahls ist die Intensität maximal und fällt dann zum Rand hin exponentiell ab.

Besonders in der Bildverarbeitung und Projektionstechnik, bei der flächige Bildmasken ausgeleuchtet werden müssen, aber auch in der Interferometrie, ist dies nachteilig, da es hier auf eine möglichst gleichmäßige Ausleuchtung der beleuchteten Fläche ankommt, die bei einem gaußförmigen Intensitätsprofil nicht gegeben ist. Auch in der Materialbearbeitung, beispielsweise der medizinischen Gewebeerhitzung oder beim Laserschweißen, werden gleichmäßige Aufwärmungen über die ganze Breite des Laserstrahls bzw. der beleuchteten Fläche verlangt, die bei einer gaußförmigen Beleuchtung und damit etwa gaußförmigen Energiedeposition nicht erreicht werden. Der Lichtstrahl soll daher für die genannten Anwendungsgebiete ein möglichst rechteckiges Querschnittsprofil haben. Das räumliche Intentsitätsprofil soll über eine gewisse Breite homogen, d.h. etwa konstant sein. In der Praxis wird dazu der Strahl aufgeweitet und nur mit dem in etwa homogenen inneren Strahlbereich gearbeitet, wobei der Außenbereich ausgeblendet wird. Dies führt jedoch zu hohen Intensitätsverlusten.

Da das eigentliche Lasersystem, das optische Verstärkungsmedium im Resonator, für den Benutzer nicht zugänglich ist, muß die Strahlformung zu einem Rechteckprofil außerhalb des Lasers erfolgen. Dazu sind optische Filter, sogenannte "Bull-Eye"-Filter, bekannt, welche den Laserstrahl in der Mitte stärker abschwächen als am Rand, so daß der glockenförmige Verlauf des Strahlprofils zu einem nahezu rechteckförmigen Profil abgeflacht wird. Diese Filter bestehen im wesentlichen aus einer transparenten Platte, z.B. einer Glasplatte, welche ortsabhängig mit einem mehr oder weniger spiegelnden Belag, zum Beispiel einem Metall, bedampft ist. Durch geeignete Wahl der ortsabhängigen optischen Dichte bzw. der lokalen Transmissions- und Reflexionseigenschaften wird das gewünschte Strahiprofil erzeugt. Diese Filter sind statisch und können daher nur für einen bestimmten Laser mit einem festen, bekannten Intensitätsprofil verwendet werden. Wenn der Laser sein Profil ändert, z.B. durch Fluktuationen oder Alterungserscheinungen, verändern die Filter das Profil in ungewünschter Form, da sie nicht mehr an die Daten des Lasers angepaßt sind. Bei den reflektierenden Filtern dieser Art besteht außerdem der Nachteil, daß das ungleichmäßig reflektierte Laserlicht auf den Laser rückwirkt und seine Stabilität beeinträchtigen kann. Anstelle der reflektierenden Filter ist des weiteren die Verwendung holografischer Filter zur Strahlformung bekannt (I. Gur et al.: Diffraction limited domain flat-top generator; Opt. Communications 145, 237 (1998)). Auch diese Filter sind statisch und können nicht auf zeitliche Änderungen des Laserstrahlprofils reagieren. Problematisch ist weiterhin, daß das rechteckige Profil nur in der Abbildungsebene des holografischen Elementes erzeugt wird.

Weitere Vorrichtungen zur Formung des Intensitätsprofils eines Laserstrahls sind aus US-A-5610733, US-A-5 986 807 und US-A-4 953 937 bekannt.

### Technische Aufgabe:

Der Erfindung liegt daher die Aufgabe zugrunde, unter Vermeidung der Nachteile des Standes der Technik ein vorgegebenes, insbesondere möglichst homogenes, rechteckförmiges Strahlprofil aus beliebigen anfänglichen Intensitätsprofilen, insbesondere aus einem Gaußschen Strahlprofil, zu formen, wobei das geformte Strahlprofil gegenüber Schwankungen des einfallenden Intensitätsprofils und der Lichtintensität weitgehend stabil sein soll.

### Offenbarung der Erfindung:

Die Aufgabe wird gelöst durch ein Verfahren zur Formung des Intensitätsprofils eines Laserstrahls, insbesondere zur Herstellung eines homogenen Intensitätsprofils, wobei der Laserstrahl auf einen optisch adressierbaren ortsauflösenden Lichtmodulator (OASLM) trifft, dessen lokale Transmissions- bzw. Reflexionseigenschaften von der lokalen Beleuchtungsintensität in nichtlinearer Weise abhängen, und der einen Sättigungsbereich aufweist, in welchem die lokal transmittierte bzw. reflektierte Intensität weitgehend unabhängig von der lokal auftreffenden Intensität ist, und wobei dieser Sättigungsbereich als Arbeitsbereich gewählt wird.

Eine erfindungsgemäße Vorrichtung zur Formung des Intensitätsprofils eines Laserstrahls, insbesondere zur Herstellung eines homogenen Intensitätsprofils, besteht aus einem optisch adressierbaren ortsauflösenden Lichtmodulator (OASLM), dessen lokale Transmissions- bzw. Reflexionseigenschaften von der lokalen Beleuchtungsintensität in nichtlinearer Weise abhängen und einen Sättigungsbereich aufweist, in welchem die lokal transmittierte bzw. reflektierte Intensität weitgehend unabhängig von der lokal auftreffenden Intensität ist, und wobei dieser Sättigungsbereich als Arbeitsbereich gewählt wird, sowie wenigstens einem Teleskopabbildungssystem, welches den Laserstrahl räumlich aufzuweiten imstande ist.

Des weiteren wird die Aufgabe gelöst durch die Verwendung des Sättigungsbereichs eines optisch adressierbaren ortsauflösenden Lichtmodulators (OASLM) zur Formung des Intensitätsprofils eines Laserstrahls, insbesondere zur Herstellung eines homogenen Intensitätsprofils.

Durch die Erfindung wird ein Strahlformer bzw. ein Verfahren zur Strahlformung bereitgestellt, bei welchem das geformte Intensitätsprofil durch die Verwendung eines aktiven bzw. adaptiven optischen Elements mit von der lokalen Beleuchtungsintensität abhängigen optischen Eigenschaften gegenüber Änderungen des ursprünglichen Intensitätsprofils stabilisiert wird. Insbesondere wird ein optisches Element verwendet, dessen lokale Transparenz sich mit der lokalen Beleuchtungsintensität ändert. Prinzipiell ohne zusätzliche steuernde Einflußnahme von außen wird dadurch automatisch ein bestimmtes Strahlprofil erzeugt, das von Schwankungen in der anfänglichen Intensitätsverteilung nahezu unabhängig ist. Das Verfahren bzw. der Strahlformer ist daher für beliebige Lasersysteme einsetzbar und muß nur in geringem Maße an die aktuellen Gegebenheiten angepaßt werden.

Das optisch nichtlineare Element ist erfindungsgemäß ein optisch adressierbarer ortsauflösender Lichtmodulator (englisch optical adressable spatial light modulator, OASLM, oder liquid crystal light valve). Um ein homogenes (rechteckförmiges) Strahlprofil eines Lasers zu erzeugen, wird er im Sättigungsbereich betrieben; die lokale transmittierte Intensität ist dann unabhängig von der lokalen Beleuchtungsintensität.

Optisch adressierbare ortsauflösende optische Modulatoren (OASLM) sind z.B. aus "Spatial Light Modulators; OSA - Technial Digest ISBN 155752-494-7 Washington 1997" bekannt und bestehen aus einer photoleitenden Schicht und einer elektrooptischen Schicht, die spannungsempfindlich ist. Bei lokaler Belichtung bricht die Spannung im Photoleiter lokal zusammen und überträgt sich auf die elektrooptische Schicht, die dadurch lokal in ihrer Durchlaß- oder Reflexionscharakteristik geändert wird und die Belichtung nun ihrerseits optisch anzeigt. Die photoleitende Schicht muß für die auffallende Beleuchtungswellenlänge empfindlich sein. Die elektrooptische Schicht ist z. B. ein Flüssigkristall, der in weiten spektralen Bereichen optische Modulatoreigenschaften besitzt. Gewisse Materialien vereinen die Eigenschaften der photoempfindlichen und der spannungsempfindlichen Schicht, wie z. B. photorefraktive Kristalle oder Polymere (Spatial Light Modulators; OSA - Technial Digest ISBN 155752-494-7 Washington 1997; M. Petrov et al.: Photorefractive Crystals, Berlin 1991).

Erfindungsgemäß werden in OASLMs Flüssigkristalle eingesetzt, die nichtlineare optische Eigenschaften aufweisen. Der OASLM basiert beispielsweise auf nematischen oder helixförmigen smektischen Flüssigkristallen, wobei letztgenannte eine Betriebsfrequenz von 10² bis 10³ Hz aufweisen und damit gegenüber Elementen auf Basis nematischer Flüssigkristalle (Schaltzeit im Bereich 10⁻² s) eine schnellere Reaktion auf Veränderungen im Ausgangsprofil ermöglichen. Die Modulationseigenschaften dieser Flüssigkristalle hängen in nichtlinearer Weise von der angelegten Spannung und damit von der lokalen Beleuchtungsintensität I auf dem Photoleiter ab.

Eine typische Durchlaßcharakteristik eines derartigen OALSM besteht in einem linearen Zusammenhang zwischen Beleuchtungs- und transmittierter Intensität für geringe Beleuchtungsintensitäten sowie einem Übergang in einen Sättigungsbereich, in dem die transmittierte Intensität nahezu unabhängig von der Beleuchtungsintensität ist. Für höhere Intensitäten kann die transmittierte Intensität wieder stärker von der Beleuchtungsintensität abhängen.

Die oben beschriebenen Eigenschaften eines OASLM erlauben es insbesondere, hohe Lichtintensitäten stärker abzuschwächen als niedrige. Dadurch wird die Intensität eines Gaußschen Strahls im Zentrum gegenüber den Randgebieten unterdrückt und die durchgelassene Intensität nähert sich der Rechteckform mit einem flachen Plateau im Zentrum.

In einer vorteilhaften Weiterbildung der Erfindung sind die Schichten des OASLM strukturiert, vorzugsweise in einzelne Zonen, insbesondere optische Punkte (pixel) aufgelöst, welche sich vorzugsweise einzeln ansteuern lassen. Dadurch wird ein Übersprechen zwischen nahen Bildpunkten vermindert. Schließlich kann somit bildpunktweise zusätzlichen auf elektrischem Wege in den Modulator eingegriffen werden, insbesondere um die lokalen Transmissionseigenschaften gezielt an das anfängliche Intensitätsprofil anzupassen. Die Ansteuerung der einzelnen Zonen kann vorteilhaft geregelt werden, indem das geformte Strahlprofil gemessen und auf Abweichungen von einer Sollform, insbesondere von der Rechteckform, untersucht wird. Die Größe der lokalen Abweichungen dient dann über einen Rückkopplungszweig zur Anpassung der Transmissionseigenschaften der Zonen bzw. Bildpunkte des OASLM.

Um im Sättigungsbereich des OASLM zu arbeiten, wird die Intensität des zu formenden Laserstrahls vorzugsweise durch Aufweiten des Strahls und/oder durch optische Filter an den Sättigungsbereich des OASLM angepaßt. Zur Strahlaufweitung wird vorzugsweise eine Abbildungsoptik in den Strahlengang eingefügt, innerhalb derer sich der OASLM befindet. Die Abbildungsoptik umfaßt vorzugsweise zwei Teleskopabbildungssysteme, welche vorzugsweise als mechanisch oder elektrisch verstellbare bzw. regelbare Zoomsysteme ausgebildet sind. Somit ist die Strahlaufweitung variabel, so daß Intensitätsänderungen durch Intensitätsschwankungen des Lasers oder nach einem Auswechseln des Lasers stets ausgeglichen werden können.

### Kurzbeschreibung der Zeichnung, in der zeigen:

- Figur 1: eine typische Transmissionscharakteristik eines OASLM
- Figur 2: drei erfindungsgemäße Anordnungen zur Strahlformung unter Verwendung eines OASLM

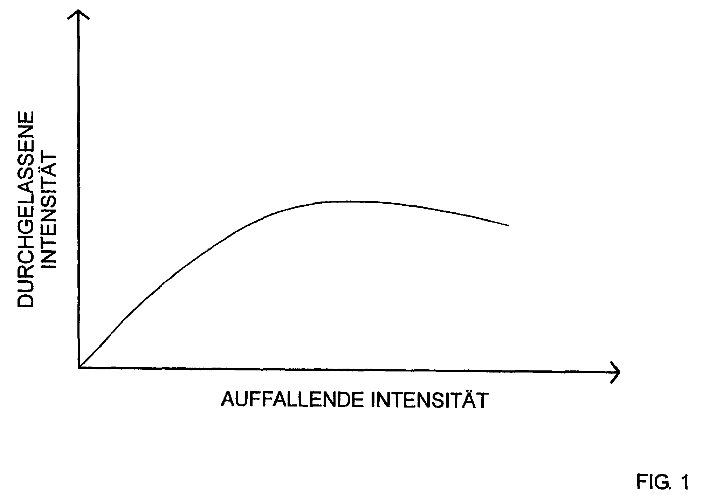

In Figur 1 zeigt schematisch eine typische Transmissionscharakteristik eines OASLM, wie er erfindungsgemäß Anwendung findet, wobei auf der x-Achse die einfallende und auf der y-Achse die transmittierte Intensität aufgetragen ist. Für kleine Intensitäten weist der OASLM eine im wesentlichen lineare Transmissionscharakteristik auf, beispielsweise ist er für die einfallende Strahlung im wesentlichen transparent. Für höhere einfallende Intensitäten ist die transmittierte Intensität im wesentlichen unabhängig von der einfallenden Intensität; dieser Sättigungsbereich wird als Arbeitsbereich für die Strahlformung gewählt. Die Intensität des zu formenden, einfallenden Laserstrahls wird durch Filter oder durch Strahlaufweitung an diesen Arbeitsbereich angepaßt. Strahlaufweitung hat dabei den Vorteil, daß sich das Licht nach Passieren des OASLM wieder bündeln läßt und somit ein geringerer Verlust der Gesamtintensität auftritt.

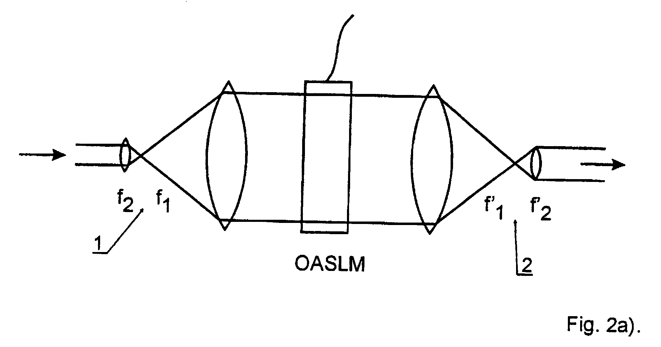

In den Figuren 2a-c sind drei Anordnungen zur erfindungsgemäßen Strahlformung unter Verwendung eines OASLM dargestellt. Figur 2a zeigt eine Anordnung, in der der OASLM zwischen zwei Kopplerteleskopen 1, 2 in den Strahlengang eines Lasers eingefügt ist. Die Teleskope 1, 2 bestehen jeweils aus zwei Linsen mit Brennweiten f₁, f₂ bzw. f₁', f₂', die im Abstand f₁+f₂ bzw. f₁'+f₂' angeordnet sind. Die Teleskope dienen zur Strahlaufweitung, um die Intensität im Zentrum des Laserstrahls soweit herabzusetzen, daß sie in den Plateaubereich der Charakteristik gemäß Figur 1 fällt. Der Laserstrahl mit abgeplattetem Strahlprofil verläßt das zweite Teleskop 2 rechts. Falls der Strahl gleichzeitig aufgeweitet werden soll, muß das rechte Teleskop 2 eine geringere Vergrößerung als das linke Teleskop 1 haben.

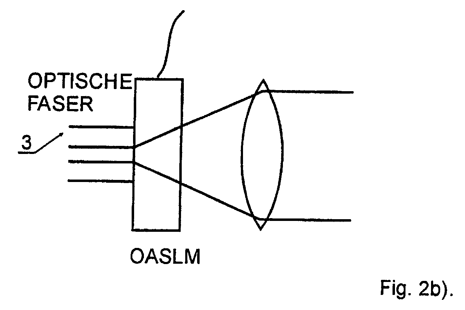

In gewissen Fällen, z.B. nach Einkopplung eines Lasers in eine optische Faser, kann Intensität des Lasers bereits optimal an den OASLM angepaßt sein. Das Licht kann dann ohne eine vorherige Aufweitung direkt auf den OASLM geführt werden, wie in Figur 2b dargestellt. Das Licht aus der Faser 3 fällt direkt auf den Strahlformer OASLM, der im optischen Kontakt mit der Faser 3 sein kann. Reflexionsverluste beim Übergang in den OASLM lassen sich in diesem Fall durch Brechungsindexanpassung mit einem Öl klein halten. Vorteilhaft an dieser Ausführungsform ist, daß der OASLM besonders klein ausgeführt werden kann.

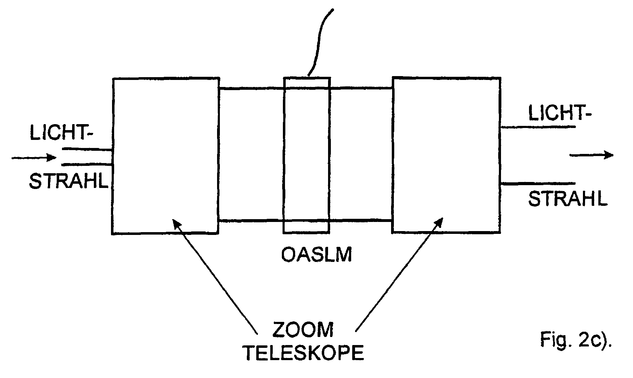

Bei starken Intensitätsschwankungen des Lasers oder wenn derselbe Strahlformer für verschiedene Lasertypen eingesetzt werden soll, empfiehlt sich die Einschaltung zweier Zoomteleskope 5, 6 anstelle von Teleskopen mit festen Vergrößerungen wie in Figur 2a. Dies ist schematisch in Figur 2c dargestellt. In diesem Fall kann die Strahlaufweitung verändert und, wenn die Zoomteleskope elektrisch verstellbar sind, auch geregelt werden.

### Gewerbliche Anwendbarkeit:

Die Erfindung läßt sich in vielfältigen Einsatzgebieten, bei denen es auf die möglichst gleichmäßige Ausleuchtung von Flächen mit Laserlicht ankommt, insbesondere bei der Bildverarbeitung und Projektionstechnik, in der Interferometrie, sowie in der Materialbearbeitung mittels Lasern, vorteilhaft gewerblich anwenden.

## Patentansprüche

1. Verfahren zur Formung des Intensitätsprofils eines Laserstrahls, insbesondere zur Herstellung eines homogenen Intensitätsprofils, wobei der Laserstrahl auf einen optisch adressierbaren ortsauflösenden Lichtmodulator (OASLM) trifft, dessen lokale Transmissions- bzw. Reflexionseigenschaften von der lokalen Beleuchtungsintensität in nichtlinearer Weise abhängen und der einen Sättigungsbereich aufweist, in welchem die lokal transmittierte bzw. reflektierte Intensität weitgehend unabhängig von der lokal auftreffenden Intensität ist, und wobei dieser Sättigungsbereich als Arbeitsbereich gewählt wird.

2. Verfahren nach Anspruch 1, **dadurch gekennzeichnet,**
**daß** die Intensität des zu formenden Laserstrahls durch Aufweiten des Strahls und/oder durch optische Filter an den Sättigungsbereich des Lichtmodulators (OASLM) angepaßt wird.

3. Verfahren nach Anspruch 1 oder 2, **dadurch gekennzeichnet,**
**daß** zur Strahlaufweitung eine Abbildungsoptik in den Strahlengang eingefügt wird, innerhalb derer sich der Lichtmodulator (OASLM) befindet.

4. Verfahren nach Anspruch 3, **dadurch gekennzeichnet,**
**daß** die Abbildungsoptik zwei Teleskopabbildungssysteme (1, 2, 5, 6) umfaßt, welche vorzugsweise als mechanisch oder elektrisch verstellbare bzw. regelbare Zoomsysteme ausgebildet sind, und somit die Strahlaulweitung variabel ist, insbesondere an Intensitätsänderungen anpaßbar ist.

5. Verfahren nach einem der Ansprüche 1 bis 4, **dadurch gekennzeichnet,**
**daß** der Lichtmodulator (OASLM) ein Flüssigkristallmodulator ist.

6. Verfahren nach einem der Ansprüche 1 bis 5, **dadurch gekennzeichnet,**
**daß** der Lichtmodulator (OASLM) in einzelne Zonen untergliedert ist, welche vorzugsweise separat elektrisch ansteuerbar sind zur Veränderung der lokalen Transmissions- und/oder Reflexionseigenschaften des Lichtmodulators.

7. Vorrichtung zur Formung des Intensitätsprofils eines Laserstrahls, insbesondere zur Herstellung eines homogenen Intensitätsprofils, bestehend aus einem optisch adressierbaren ortsauflösenden Lichtmodulator (OASLM), dessen lokale Transmissions- bzw. Reflexionseigenschaften von der lokalen Beleuchtungsintensität in nichtlinearer Weise abhängen und der einen Sättigungsbereich aufweist, in welchem die lokal transmittierte bzw. reflektierte Intensität weitgehend unabhängig von der lokal auftreffenden Intensität ist, wobei dieser Sättigungsbereich als Arbeitsbereich gewählt wird, sowie wenigstens einem Teleskopabbildungssystem, welches den Laserstrahl räumlich aufzuweiten imstande ist.

8. Vorrichtung nach Anspruch 7, **dadurch gekennzeichnet,**
**daß** der Lichtmodulator (OASLM) ein Flüssigkristallmodulator ist.

9. Vorrichtung nach Anspruch 7 oder 8, **dadurch gekennzeichnet,**
**daß** der Lichtmodulator (OASLM) in einzelne Zonen untergliedert ist, welche vorzugsweise separat elektrisch ansteuerbar sind zur Veränderung der lokalen Transmissions- und/oder Reflexionseigenschaften des Lichtmodulators.

10. Verwendung des Sättigungsbereichs eines optisch adressierbaren ortsauflösenden Lichtmodulators (OASLM) zur Formung des Intensitätsprofils eines Laserstrahls, insbesondere zur Herstellung eines homogenen Intensitätsprofils.

## Claims

1. Process for shaping the intensity profile of a laser beam, particularly for producing a homogeneous intensity profile, the laser beam impinging on an optically addressable spatial light modulator (OASLM) whose local transmission and/or reflection properties depend in non-linear manner on the local illumination intensity, said optically addressable spatial light modulator (OASLM) having a saturation range in which the locally transmitted and/or reflected intensity is broadly independent of the locally incident intensity, said saturation range being selected as the working range.

2. Process according to claim 1, **characterized in that**
the intensity of the laser beam to be shaped is adapted to the saturation range of the light modulator (OASLM) by expansion of the beam and/or by optical filters.

3. Process according to claim 1 or 2, **characterized in that**
in order to expand the beam, an imaging optics is inserted into the optical path, the light modulator (OASLM) being situated within said imaging optics.

4. Process according to claim 3, **characterized in that**
the imaging optics comprises two telescopic imaging systems (1, 2, 5, 6) preferably in the form of mechanically or electrically adjustable and/or controllable zoom systems, the expansion of the beam therefore being variable, in particular being adaptable to changes of intensity.

5. Process according to any one of claims 1 to 4, **characterized in that**
the light modulator (OASLM) is a liquid-crystal modulator.

6. Process according to any one of claims 1 to 5, **characterized in that**
the light modulator (OASLM) is divided into individual zones which are preferably separately electrically controllable in order to change the local transmission and/or reflection properties of the light modulator.

7. Device for shaping the intensity profile of a laser beam, particularly for producing a homogeneous intensity profile, consisting of an optically addressable spatial light modulator (OASLM) whose local transmission and/or reflection properties depend in non-linear manner on the local illumination intensity, as well as of at least one telescopic imaging system capable of spatially expanding the laser beam.

8. Device according to claim 7, **characterized in that**
the light modulator (OASLM) is a liquid-crystal modulator.

9. Device according to claim 7 or 8, **characterized in that**
the light modulator (OASLM) is divided into individual zones which are preferably separately electrically controllable in order to change the local transmission and/or reflection properties of the light modulator.

10. Use of the saturation range of an optically addressable spatial light modulator (OASLM) for shaping the intensity profile of a laser beam, particularly for producing a homogeneous intensity profile, said optically addressable spatial light modulator (OASLM) having a saturation range in which the locally transmitted and/or reflected intensity is broadly independent of the locally incident intensity, said saturation range being selected as the working range.

## Revendications

1. Procédé pour le façonnage du profil d'intensité d'un faisceau laser, en particulier pour la fabrication d'un profil d'intensité homogène, le faisceau laser rencontrant un modulateur de lumière spatial à adressage optique (OASLM) dont les propriétés de transmission et de réflexion locales dépendent de façon non linéaire de l'intensité d'éclairage locale et qui présente une zone de saturation dans laquelle l'intensité transmise ou réfléchie localement est largement indépendante de l'intensité localement incidente, et cette zone de saturation étant choisie comme zone de travail.

2. Procédé selon la revendication 1, **caractérisé en ce que** l'intensité du faisceau laser à façonner est adaptée à la zone de saturation du modulateur de lumière (OASLM) par élargissement du faisceau et/ou par des filtres optiques.

3. Procédé selon l'une quelconque des revendications 1 ou 2, **caractérisé en ce que**, pour élargir le faisceau, on ajoute une optique de représentation dans la marche des rayons à l'intérieur de laquelle se trouve le modulateur de lumière (OASLM).

4. Procédé selon la revendication 3, **caractérisé en ce que** l'optique de représentation comporte deux systèmes de représentation télescopique (1, 2, 5, 6) conformés, de préférence, comme des systèmes de zoom ajustables ou réglables par voie mécanique ou électrique, l'élargissement du faisceau étant ainsi variable et en particulier adaptable aux modifications de l'intensité.

5. Procédé selon l'une quelconque des revendications 1 à 4, **caractérisé en ce que** le modulateur de lumière (OASLM) est un modulateur à cristaux liquides.

6. Procédé selon l'une quelconque des revendications 1 à 5, **caractérisé en ce que** le modulateur de lumière (OASLM) est divisé en différentes zones sur lesquelles on agira de préférence séparément par voie électrique afin de modifier les propriétés de transmission et/ou de réflexion locales du modulateur de lumière (OASLM).

7. Dispositif pour le façonnage du profil d'intensité d'un faisceau laser, en particulier pour la fabrication d'un profil d'intensité homogène constitué d'un modulateur de lumière spatial à adressage optique (OASLM) dont les propriétés de transmission et de réflexion locales dépendent de façon non linéaire de l'intensité d'éclairage locale et qui présente une zone de saturation dans laquelle l'intensité transmise ou réfléchie localement est largement indépendante de l'intensité localement incidente cette zone de saturation étant choisie comme zone de travail, et d'au moins un système de représentation télescopique en mesure d'élargir le faisceau laser dans l'espace.

8. Dispositif selon la revendication 7, **caractérisé en ce que** le modulateur de lumière (OASLM) est un modulateur à cristaux liquides.

9. Dispositif selon l'une quelconque des revendications 7 ou 8, **caractérisé en ce que** le modulateur de lumière (OASLM) est divisé en différentes zones sur lesquelles on agira de préférence séparément par voie électrique afin de modifier les propriétés de transmission et de réflexion locales du modulateur de lumière (OASLM).

10. Utilisation de la zone de saturation d'un modulateur de lumière spatial à adressage optique (OASLM) pour façonner le profil d'intensité d'un faisceau laser, en particulier pour générer un profil d'intensité homogène.
